# EUROPEAN PATENT SPECIFICATION

(11) **EP 3 344 883 B1**
(45) Date of publication and mention of the grant of the patent: **06.05.2020**
(21) Application number: 15763378.5
(22) Date of filing: 02.09.2015
(51) Int. Cl.: F16C 17/04, F16C 32/06, F16C 33/10, F16C 9/02, F16C 9/04

(54) **BEARING ELEMENT**
LAGERELEMENT
ÉLÉMENT DE PALIER

(43) Date of publication of application: 11.07.2018
(73) Proprietor: Wärtsilä Finland Oy, 65100 Vaasa (FI)
(72) Inventor: ISTOLAHTI, Jaakko, FI-65100 Vaasa (FI)
(74) Representative: Berggren Oy, Helsinki & Oulu
(86) International application number: PCT/FI2015/050571
(87) International publication number: WO 2017/037329

(56) References cited:
- EP-A1- 1 469 212
- EP-A1- 2 703 664
- EP-A1- 2 806 177
- WO-A1-2013/169505
- DE-A1- 2 209 994
- DE-A1- 4 407 453
- FR-A- 518 923
- JP-A- S58 117 381
- US-A- 5 951 169
- US-A1- 2004 076 350

## Description

### Technical field of the invention

The present invention relates to a bearing element in accordance with the preamble of claim 1.

### Background of the invention

Thrust bearings are used in many different applications for carrying axial loads. A thrust bearing allows the rotation of a shaft or other rotating part against a stationary part. The operation of thrust bearings can be based on many different principles. In the simplest form, two parts can be arranged to slide against each other. However, usually the friction between the rotating parts is reduced in some way, for instance by having rolling elements, such as balls or rollers, between the rotating parts, or by utilizing a fluid film or magnetic field to prevent direct contact between two parts rotating in relation to each other, like disclosed in DE 22 09 994 A1.

Some examples of applications where thrust bearings are used are the crankshafts and camshafts of piston engines. For instance, main bearings of a piston engine carry the radial forces that are directed at the crankshaft, and thrust bearings are used for carrying the axial forces. The axial forces are relatively small compared to the radial forces, but the axial forces are often shock-type forces. Many known thrust bearings are not particularly good at handling the shock-type forces.

### Summary of the invention

The object of the present invention is to provide an improved bearing element for carrying axial loads. The bearing element has an annular shape and comprises a first end surface, which is configured to be supported against an object that is stationary in relation to the bearing element, and a second end surface, which is configured to support a part rotating in relation to and coaxially with the bearing element. The characterizing features of the bearing element according to the invention are given in the characterizing part of claim 1.

According to the invention, the second end surface is provided with a concave portion, which runs along the circumference of the bearing element over the whole second end surface.

Because of the concave portion on the second end surface, the amount of oil in the middle of the bearing surface can be increased. This improves the ability of the bearing element to dampen shock-type axial forces.

According to the invention, the depth of the concave portion is 0.005 to 0.05 mm in the middle of the concave portion. Preferably, the depth of the concave portion is 0.01 to 0.03 mm in the middle of the concave portion.

According to an embodiment of the invention, the width of the concave portion is at least 40 percent of the width of the second end surface of the bearing element.

According to an embodiment of the invention, the concave portion is arranged in the middle of the second end surface.

### Brief description of the drawings

Embodiments of the invention are described below in more detail with reference to the accompanying drawings, in which
Fig. 1 shows a top view of a bearing element according to an embodiment of the invention,
Fig. 2 shows a cross-sectional view of the bearing element of figure 1 taken along line A-A, and
Fig. 3 shows schematically a cross-sectional view of a bearing element supporting a rotatable shaft.

### Description of embodiments of the invention

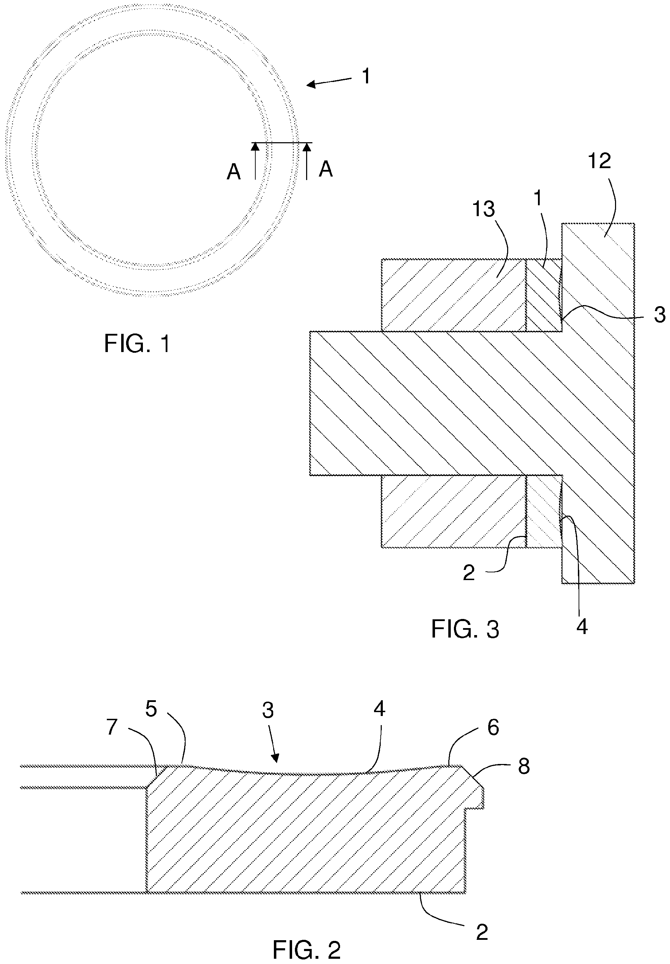

Figure 1 shows a top view of a bearing element 1 according to an embodiment of the invention. In figure 2 is shown a cross-sectional view of the same bearing element 1 taken along line A-A of figure 1. The bearing element 1 is configured to be assembled between two objects which rotate in relation to each other. For instance, one of the objects can be stationary and the other object can be a rotating shaft. The bearing element 1 is configured to carry axial loads.

The bearing element 1 has an annular shape. It is thus a ring-like part having an open center region. The bearing element 1 has a first end surface 2 and a second end surface 3. The first end surface 2 is configured to be supported against an object that is stationary in relation to the bearing element 1. The bearing element 1 can be a part of a bearing module, in which case the first end surface 2 can be supported against a part forming the body of the bearing module. However, the bearing element 1 could also be attached directly to a stationary part of a machine comprising a rotating part, which rotates against the bearing element 1. The bearing element 1 also has a second end surface 3. The second end surface 3 is configured to support a part rotating in relation to the bearing element 1. The second end surface 3 is thus a bearing surface. In case the bearing element 1 forms part of a bearing module, the part rotating in relation to the bearing element 1 can be a part of the bearing module. However, the rotating part, such as a shaft, could also be arranged directly against the second end surface 3 of the bearing element 1. The rotating part rotates coaxially with the bearing element 1.

The bearing element 1 according to the invention can be used for example in piston engines. For instance, the bearing element 1 is suitable for carrying axial loads acting on a crankshaft or a camshaft of a large piston engine, such as a ship engine or a power plant engine. In the example of figure 3, a bearing element 1 is arranged to carry axial forces of a rotating shaft 12. Figure 3 shows a shaft 12, which is supported by a bearing 13. The bearing 13 carries the radial load of the shaft 12. The bearing element 1 is arranged between the bearing 13 and a flange of the shaft 12. The first end surface 2 of the bearing element 1 is supported against the bearing 13. The bearing 13 is a stationary part and therefore the bearing 13 and the bearing element 1 do not rotate in relation to each other. The second end surface 3 of the bearing element 1 faces the flange of the shaft 12. In case the shaft 12 moves axially so that the flange of the shaft 12 moves towards the bearing element 1, the bearing element 1 can carry the axial load, while simultaneously allowing rotation of the shaft 12. The shaft 12 is coaxial with the bearing element 1, and the shaft 12 can thus rotate coaxially in relation to the bearing element 1. The arrangement of figure 3 could also be provided with a second bearing element 1, which would be arranged to carry axial forces in the opposite direction.

The second end surface 3 of the bearing element 1 forms part of a fluid bearing, where a fluid film is formed between the second end surface 3 and the part rotating in relation to the bearing element 1. In the course of operation, the bearing element 1 can be affected by shock-type axial forces. Many bearing elements are not very good at handling this kind of forces. To improve the ability of the bearing element 1 to damp axial pulses, the second end surface 3 of the bearing element 1 according to the invention is provided with a concave portion 4, which can be best seen in figure 2. The concave portion 4 runs along the circumference of the bearing element 1 over the whole second end surface 3 of the bearing element 1. The concave portion 4 is thus an annular groove. The concave portion 4 is also axially symmetric about the center axis of the bearing element 1. Because of the concave portion 4, the amount of lubrication oil is increased in the middle of the bearing surface. The greater amount of oil improves the ability of the bearing element 1 to dampen shock-type axial forces. The dampening effect is based on the squeezing of the oil film and the deformation of the second end surface 3 of the bearing element 1.

The depth and the width of the concave portion 4 of the second end surface 3 depend on the application. In many cases, a suitable depth for the concave portion 4 in the middle of the concave portion 4 is 0.005 to 0.05 mm, preferably 0.01 to 0.03 mm. The depth of the concave portion 4 decreases towards the inner perimeter and the outer perimeter of the bearing element 1. The width of the concave portion 4 is preferably at least 40 percent of the width of the second end surface 3. For better illustration of the shape of the concave portion 4, the depth of the concave portion is exaggerated in the figures.

In the embodiment of figures 1 and 2, the concave portion 4 is arranged in the middle of the second end surface 3. The second end surface further comprises a first flat portion 5 that is arranged on the inner side of the concave portion 4. A second flat portion 6 is arranged on the outer side of the concave portion 4. The second end surface 3 further comprises a first chamfered portion 7, which is on the inner side of the first flat portion 5, and a second chamfered portion 8, which is on the outer side of the second flat portion 6.

It will be appreciated by a person skilled in the art that the invention is not limited to the embodiments described above, but may vary within the scope of the appended claims.

## Claims

1. A bearing element (1) for carrying axial loads, the bearing element (1) having an annular shape and comprising a first end surface (2), which is configured to be supported against an object (13) that is stationary in relation to the bearing element (1), and a second end surface (3), which is configured to support a part (12) rotating in relation to and coaxially with the bearing element (1), **characterized in that** the second end surface (3) is provided with a concave portion (4), which runs along the circumference of the bearing element (1) over the whole second end surface (3) and that the depth of the concave portion (4) is 0.005 to 0.05 mm in the middle of the concave portion (4).

2. A bearing element (1) according to claim 1, wherein the depth of the concave portion (4) is 0.01 to 0.03 mm in the middle of the concave portion (4).

3. A bearing element (1) according to claim 1 or 2, wherein the width of the concave portion (4) is at least 40 percent of the width of the second end surface (3) of the bearing element (1).

4. A bearing element (1) according to any of the preceding claims, wherein the concave portion (4) is arranged in the middle of the second end surface (3).

## Patentansprüche

1. Lagerelement (1) zum Tragen axialer Lasten, wobei das Lagerelement (1) eine ringförmige Form aufweist und eine erste Endfläche (2) umfasst, die konfiguriert ist, um auf einem Objekt (13) aufzuliegen, das in Bezug auf das Lagerelement (1) stationär ist, und eine zweite Endfläche (3), die konfiguriert ist, um ein Teil (12) zu tragen, das sich in Bezug auf und koaxial zu dem Lagerelement (1) dreht, **dadurch gekennzeichnet, dass** die zweite Endfläche (3) mit einem konkaven Abschnitt (4) versehen ist, der sich entlang des Umfangs des Lagerelements (1) über die gesamte zweite Endfläche (3) erstreckt, und dass die Tiefe des konkaven Abschnitts (4) in der Mitte des konkaven Abschnitts (4) 0,005 bis 0,05 mm beträgt.

2. Lagerelement (1) nach Anspruch 1, wobei die Tiefe des konkaven Abschnitts (4) in der Mitte des konkaven Abschnitts (4) 0,01 bis 0,03 mm beträgt.

3. Lagerelement (1) nach Anspruch 1 oder 2, wobei die Breite des konkaven Abschnitts (4) mindestens 40 Prozent der Breite der zweiten Endfläche (3) des Lagerelements (1) beträgt.

4. Lagerelement (1) nach einem der vorhergehenden Ansprüche, wobei der konkave Abschnitt (4) in der Mitte der zweiten Endfläche (3) angeordnet ist.

## Revendications

1. Élément porteur (1) destiné à supporter des charges axiales, l'élément porteur (1) ayant une forme annulaire et comprenant une première surface terminale (2) qui est conçue pour être supportée contre un objet (13) qui est stationnaire par rapport à l'élément porteur (1), et une seconde surface terminale (3) qui est conçue pour supporter une pièce (12) tournant par rapport et coaxialement à l'élément porteur (1), **caractérisé en ce que** la seconde surface terminale (3) est pourvue d'une section concave (4) qui passe le long de la circonférence de l'élément porteur (1) sur toute la seconde surface terminale (3) et que la profondeur de la section concave (4) est de 0,005 à 0,05 mm au milieu de la section concave (4).

2. Élément porteur (1) selon la revendication 1, dans lequel la profondeur de la section concave (4) est de 0,01 à 0,03 mm au milieu de la section concave (4).

3. Élément porteur (1) selon la revendication 1 ou 2, dans lequel la largeur de la section concave (4) représente au moins 40 % de la largeur de la seconde surface terminale (3) de l'élément porteur (1).

4. Élément porteur (1) selon l'une quelconque des revendications précédentes, dans lequel la section concave (4) est disposée au milieu de la seconde surface terminale (3).
